Europäisches Patentamt

European Patent Office

Office européen des brevets

(19)

(11) EP 1 538 563 A2

(12) EUROPEAN PATENT APPLICATION

(43) Date of publication:
08.06.2005 Bulletin 2005/23

(51) Int Cl.⁷: G06T 5/00

(21) Application number: 04028294.9

(22) Date of filing: 30.11.2004

(84) Designated Contracting States:
AT BE BG CH CY CZ DE DK EE ES FI FR GB GR
HU IE IS IT LI LU MC NL PL PT RO SE SI SK TR
Designated Extension States:
AL HR LT LV MK YU

(30) Priority: 02.12.2003 EP 03425774

(71) Applicant: Digitec S.r.l.
23900 Lecco (IT)

(72) Inventor: Re, Fausto
23857 Valgreghentino (LC) (IT)

(74) Representative: Valentini, Giuliano
Marietti Gislon e Trupiano S.r.l.
Via Larga 16
20122 Milano (IT)

(54) Process and apparatus for performing X-ray digital fluoroscopy

(57) An apparatus and a process for performing digital X-ray fluoroscopy on the body of a patient are described, wherein the acquired digital images are subjected to a first step of noise reduction and a second step of geometrical image correction.

Fig. 1

EP 1 538 563 A2

**Description**

The present invention concerns a process and an apparatus to perform real-time processing of images acquired by means of digital X-ray fluoroscopy.

In the field of digital X-ray fluoroscopy, an image is obtained by means of an image-acquisition system that includes a camera, such as a CCD sensor for example, and a so-called "brilliance intensifier" that converts the radiation incident on its sensitive surface, radiation of very high frequency and thus beyond the "visible" spectrum, into light in the visible spectrum.

This allows the projection of a site of interest in the patient's body to be reconstructed in front of the camera and, as a consequence, to project the detected image onto a display monitor.

However, the images obtained by means of X-ray fluoroscopy have, by nature, a large amount of noise. In the particular case of images obtained in a digital format, noise-filtering algorithms have been proposed up until now. Nevertheless, every algorithm proposed so far has not been found sufficiently versatile to allow clear visualization under all image acquisition circumstances, for example in the case where it is necessary to obtain clear images of one or more details in movement.

In addition, the above-mentioned system for the acquisition of digital images introduces a geometrical distortion of the real image. In fact, it should be kept in mind that the radiation emission source is substantially point-like and the primary screen of the brilliance intensifier has approximatively the shape of a spherical arc.

The image of the patient projected on the primary screen, both for the type of projection and for the shape of the primary screen, undergoes a "cushion effect" distortion due to the increase in magnification in the radial direction, that is to say from the centre of the image toward the periphery. Therefore, the same detail can be shown differently if taken in correspondence to the centre or the periphery of the primary screen.

In the known art, it has been attempted to overcome these problems adopting suitable processing of the acquired images. An attempt to solve these problems of image clarity and distortion has been proposed in US Patent no. 6215846, in which it is suggested to adopt temporal filtering of the pixels in an image to attenuate the noise, and wherein the geometrical correction is accomplished by means of polynomial expressions.

It is also opportune to underline that in numerous applications of fluoroscopy, especially for surgery in the operating room, it is often necessary to rotate the image displayed on the monitor to allow the doctor to have a clearer and more comfortable view of the anatomic area of the patient in relation to the operation to be performed.

For this reason, in the fluoroscopy machines currently on the market, it is possible to mechanically rotate the camera by means of suitably remote-controlled motors.

The movement of the camera is quite slow and several seconds may be needed to turn it to the desired position, or even a few minutes if the choice of the best position is made by observing the displayed image. In any case, the mechanical rotation of the camera necessarily requires continuous exposure to X-rays to continuously display the image until the desired position is identified.

Consequently, the patient is pointlessly subjected to radiation that is not necessary for operating and diagnostic purposes.

As a partial solution to this drawback, complementary systems have been proposed that provide for the acquisition of an image, its temporary storage, the digital rotation of the image and the subsequent mechanical rotation of the camera to the desired angle.

The acquisition and storage of the image of the patient requires very short exposure and the rotation of the image can be made using a microprocessor or a PC that displays the rotated image and allows the desired angle of rotation to be determined. Once the image has been rotated to the desired position, the corresponding angle of rotation is communicated to a driver circuit of the electric motor associated with the camera, and the consequent mechanical rotation of the camera to the desired position is carried out.

This approach allows the patient's exposure to radiation to be limited, but also in this case, significant complexity in the camera handling system is involved. In fact, in addition to the encumbrance of the cables connecting the camera, it is also necessary to install and connect an angular transducer mounted on the camera itself.

The need is thus felt to have apparatus for digital X-ray fluoroscopy at one's disposal that allows the numerous drawbacks of prior art to be overcome.

In general, the object of the present invention is that of providing a process and apparatus for digital X-ray fluoroscopy capable of producing high-quality images in real time.

A particular object of the present invention is that of providing a process and apparatus for digital X-ray fluoroscopy that allows a patient's exposure to the radiation used for creating the images to be reduced as much as possible.

Another object of the present invention is that of proposing a process and apparatus for digital X-ray fluoroscopy that enables the acquisition and processing of images to be performed without introducing constructional complications to the apparatus.

These objects are achieved by the present invention thanks to a process according to claim 1 and an apparatus according to claim 11. Further peculiar features of the present invention will be specified in the respective dependent claims.

According to a first aspect of the present invention, a process for performing digital X-ray fluoroscopy on the body of a patient is provided, characterized by the steps of:

a) subjecting the site of interest in the patient's body to irradiation with X-rays in order to acquire a sequence of images of the site of interest by means of a digital image acquisition system,
b) storing the images of the sequence,
c) performing at least one noise reduction operation to achieve at least one clear image of the site of interest,
d) performing at least one geometrical correction operation on the clear image of the site of interest, and
e) displaying at least one clear and geometrically correct image on a display monitor.

Noise reduction is preferably carried out by applying at least two different filtering algorithms to the value of each pixel. Each algorithm is applied with a coefficient, or weight, variable between 0 and 1 and based on the noise band to be intercepted.

The process can also involve the digital rotation of the image to be shown prior to its display on the monitor. This enables the monitor to show an image rotated with respect to that effectively taken by the acquisition system and the angle of rotation can still be varied as desired without rendering mechanical rotation of the camera necessary.

Pointless exposure of the patient to the X-rays that would be necessary during the steps of mechanical rotation of the camera is thus avoided.

Furthermore, by keeping the camera stationary, additional noise components due to the movement of the acquired image are not introduced. The displayed images, previously filtered to reduce noise, are consequently always of high quality, independently of variations in the angle of rotation.

All of these operations are carried out in extremely brief intervals, sufficient to allow a high-quality image to be displayed in real time, even with an acquisition rate of 25-30 images per second.

The geometrical correction and possible rotation of the image to be displayed are carried out by operating on the position of each pixel expressed in polar coordinates. The pixels are those of the image obtained from the previous noise reduction. By operating in polar coordinates, the necessary processing for geometrical correction and possible image rotation can be carried out with ease and in a substantiously instantaneous manner.

According to a second aspect of the present invention, an apparatus is provided for performing digital X-ray fluoroscopy on the body of a patient, including at least one source of X-rays for irradiating a site of interest in the patient's body, at least one system for acquiring a sequence of digital images of the site of interest, means for storing the acquired images and a display monitor for displaying at least one processed image, characterized by including first means for digitally processing the images to perform at least the noise reduction and second digital processing means to perform at least the geometrical correction of the image in order to obtain at least one clear and geometrically correct image of the site of interest on the monitor.

Further characteristics and advantages of the present invention will become clearer from the following description, provided as a non-limitative illustration with reference to the attached schematic drawings, in which:

- Figure 1 is a general diagram of apparatus for digital fluoroscopy in accordance with the present invention;
- Figure 2 is a diagram that illustrates the functioning of noise reduction using a temporal filtering algorithm;
- Figure 3 is a diagram that illustrates the functioning of noise reduction using a spatial filtering algorithm;
- Figure 4 is a diagram that illustrates the application in accordance with the present invention of the filtering algorithms illustrated in Figures 2 and 3;
- Figure 5 is a block diagram of the second means for digitally processing the images for performing the correction and possible rotation of the images according to a possible form of embodiment of the present invention;
- Figure 6 represents a sample image consisting of concentric circles;
- Figure 7 represents a geometrically deformed image that is displayed on a monitor in the absence of any geometrical correction whatsoever, and which corresponds to the sample image of Figure 6 obtained with an image acquisition system equipped with a brilliance intensifier;
- Figure 8 illustrates the principle of geometrical correction of the image performed in accordance with the present invention with reference to the images of Figures 6 and 7; and
- Figures 9A-9C represent the sample images of a grid as displayed on a monitor, in the absence of any correction whatsoever (Fig. 9A), with just geometrical correction of the distortion (Fig. 9B) and with geometrical correction and rotation (Fig. 9C) respectively.

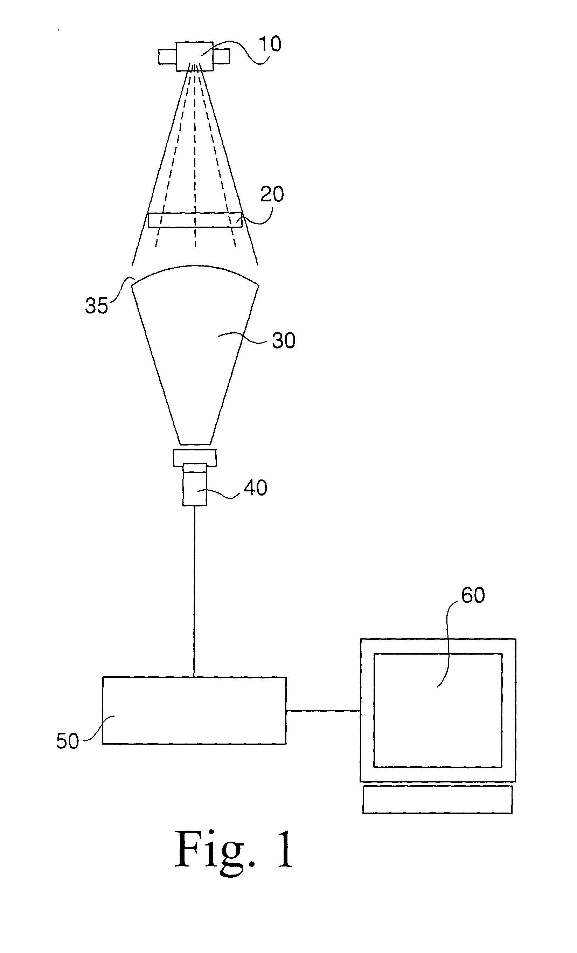

The apparatus in Figure 1 includes an X-ray generator 10 that projects a beam of radiation towards a body to be displayed 20 and incident on a sensitive surface 35 of a brilliance intensifier 30. The latter converts the X-ray radiation into visible light that is captured by a camera 40 mechanically and optically coupled to it.

The camera 40 converts the captured light into electrical signals and can, for example, consist of a high-definition CCD-type sensor, with a 1024x1024 pixel matrix, 6 to 12 bit pixel depth and an image acquisition rate from 25 to 30 images (or frames) per second.

The electrical output signals of the camera 40 are passed in input to a device 50 for the digital processing of the images, the outgoing electrical signals of which are routed to a monitor 60 for visualization.

In particular, the device 50 includes first digital processing means to carry out noise reduction. These means of noise reduction are placed between the camera 40 and the second digital processing means, which will be described further on. This allows a final image of the site of interest to be obtained with noise reduction and with the possibility of rotating it without losing quality.

One of the filtering algorithms used in the present invention is that of temporal filtering, which is based on the average of successive images, an average that can be linear or recursive. This algorithm is found to be very effective on images without details in movement, but has the drawback of causing persistence in image display with a trailing effect (known as blurring), particularly irritating especially in surgical examinations where the movement of catheters and surgical items is perceived with a certain delay.

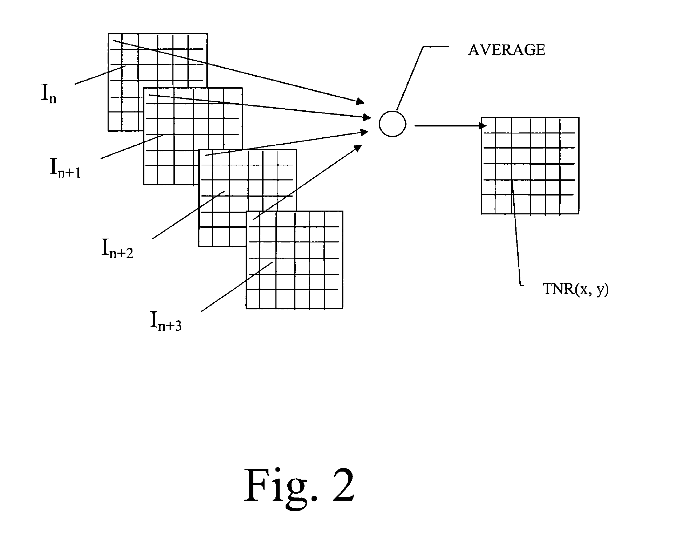

This method, of which a base drawing is provided in Figure 2, is described in texts as "averaging" and allows an image TNR(x,y) to be obtained in which the value of each pixel is formed from the image resulting from the average of a series of consecutive images, for example the four images indicated by $I_n$, $I_{n+1}$, $I_{n+2}$, and $I_{n+3}$. In the practical realization, the circuit that implements this function can also be made with a memory block associated with an arithmetic unit that operates on successive images to calculate an average between each pixel present in the same spatial position.

Unfortunately, this method adds an uncompensated residual-motion effect depending on the number of images from which the average is determined.

Another of the filtering algorithms utilized in the present invention is that of spatial filtering, which reduces noise based on calculations performed on a predefined matrix of known size of the "low-pass" type. This approach conserves the spontaneity of image display without blurring, but exhibits a loss in detail definition and a reduction in the pass band of the imaging system.

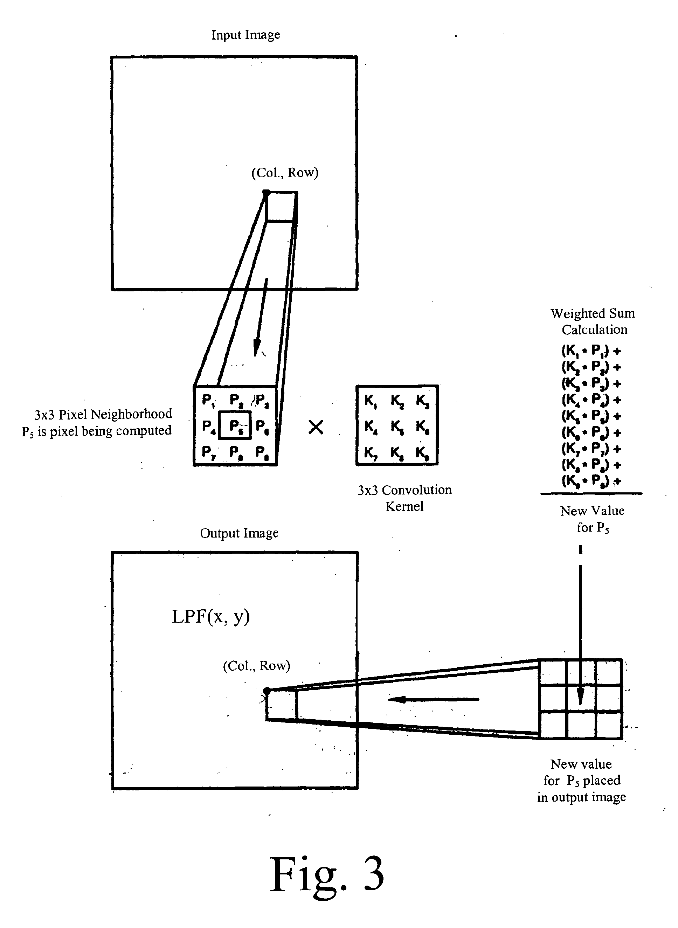

An example of the principle forming the basis of this type of algorithm, though known in current art, is outlined in Figure 3. The example refers to 3x3 matrix with pixels identified as $P_1$-$P_9$ and centred on pixel $P_5$, which must be filtered. In practice, a correction is made to the value of each pixel based on weighted values of the pixel itself and of the pixels present around the one considered.

Typical illustrative values for certain combinations of coefficients, indicated in Figure 3 as $K_1$-$K_9$ (also known as "low pass spatial filters"), to perform spatial filtering around a given pixel, are shown in the table below.

| Combinations of coefficients $K_1$-$K_9$ | | | | | | | | | | |
|---|---|---|---|---|---|---|---|---|---|---|
| Example 1 | | | | Example 2 | | | | Example 3 | | |
| 1/9 | 1/9 | 1/9 | | 1/10 | 1/10 | 1/10 | | 1/16 | 1/8 | 1/16 |
| 1/9 | 1/9 | 1/9 | | 1/10 | 1/5 | 1/10 | | 1/8 | 1/4 | 1/8 |
| 1/9 | 1/9 | 1/9 | | 1/10 | 1/10 | 1/10 | | 1/16 | 1/8 | 1/16 |

As can be noted, the sum of the coefficients $K_1$-$K_9$ of each example is always equal to one. In example 1, all of the weights are the same. In example 2, greater weight is given to the value of the pixel being processed, while the values of the pixels arranged around it are multiplied by a weight that is half that of the pixel of interest. For the coefficients in example 3, the coefficients relative to the pixels at the vertices (further "away" and thus of less influence) are differentiated with respect to that of interest and those that are "nearer".

The sum of the values of the pixel being processed and the pixels arranged around it, each multiplied by the assigned weight, determines the new value for the filtered pixel. From this filtering operation, an image is obtained that will be defined henceforth as LPF(x,y).

In accordance with the present invention, the application of a system is proposed that uses both temporal and spatial filters that operate in parallel and with a circuit that calculates the variation in the value of each pixel arriving from the camera 40 with the corresponding value of the pixel contained in the memory of the temporal filter, namely a pixel of the image TNR(x,y).

The final value of the pixel in output from the digital processing means for noise reduction is an opportunely weighted composition of the values of the pixels in output from the temporal filter block and from the spatial filter block, calculated on the basis of a section of the circuit for movement detection.

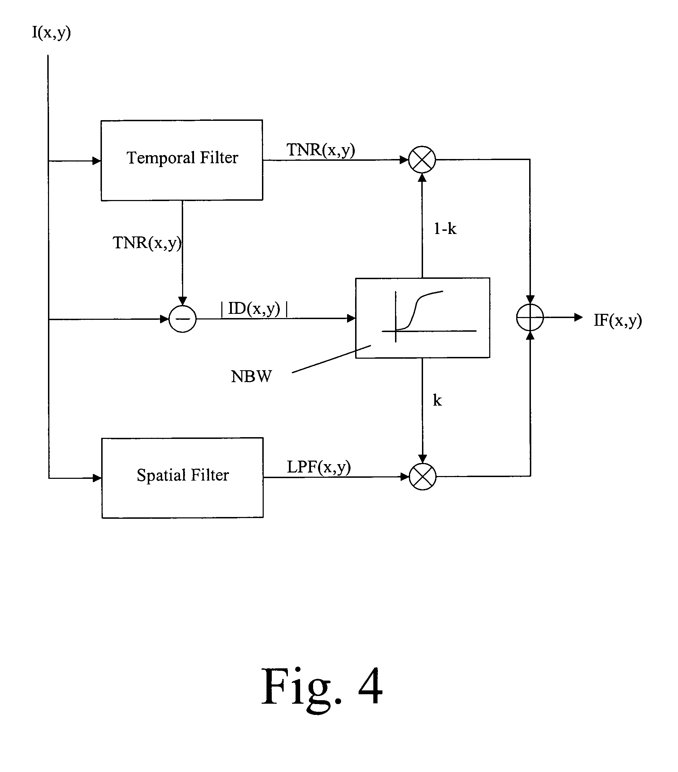

A diagram illustrating the application of the innovative principles of the present invention is shown in Figure 4.

In practice, considering the two filter blocks described above, one which carries out noise reduction with a temporal filter and one which carries out noise reduction with a spatial filter, the movement detection of each individual pixel is realized by means of a circuit that calculates the difference between each pixel of a current image I(x,y) and each pixel of the image TNR(x,y) obtained in output from the temporal filter block.

This difference value, calculated as an absolute value and defined as ID(x,y), determines a coefficient k according to a curve NBW, opportunely calculated on the basis of the noise band to be intercepted. For commodity, a sequence of discrete values of k representing the curve NBW can be stored in a table.

In practice, if a difference of a certain entity is detected between the pixel of the current image I(x,y) and the pixel of the image TNR(x,y), it means that a movement had taken place in that point of the image, for example a catheter being moved by a surgeon.

If the final image were that in output from the temporal filter block, a residual movement (blurring) would be obtained. To eliminate this phenomenon, the weight of the temporal filter must be reduced for this pixel, and for all the pixels involved in the movement of the supposed catheter, therefore constructing the pixel as the average of an increasingly smaller number of images. This would however have the result of reintroducing noise in the pixels involved.

For this reason, the reconstruction of the image of the pixels involved in the movement is carried out with the contribution of the spatial filter block, which safeguards the pixels in movement from noise, whilst keeping the temporal filtering for pixels not involved in the movement, namely the pixels that in general make up nearly the entire image.

The final filtered image IF(x,y) is analytically reconstructed according to the following formula:

$$IF(x,y) = (1-k)*TNR(x,y) + k*LPF(x,y)$$

where k represents precisely the coefficient determined by the curve NBW defined in the table according to the image difference ID calculated as an absolute value, namely:

$$ID(x,y) = | I (x,y)-TNR(x,y)|$$

This is considered an innovative detail of this application.

The noise reduction in the images acquired through the utilization of a temporal filter and a spatial filter in parallel, and their modulating contribution based on the parameter k, has been found particularly effective for providing an especially clear image under all conditions.

Naturally, the system can be configured according to its application with a temporal filter where the number of images involved in the construction of the average can be different from that indicated in Figure 2, as well as the matrix of the spatial filter can also assume configurations of a higher order with respect to 3x3 dimensions of Figure 3 to further reduce the noise.

The image IF(x,y) obtained in output from the first digital processing means is passed In input to the second digital processing means, which effects the geometrical correction and the possible rotation of the image that it is intended to display on the monitor 60. In this way, whatever the additional image processing is, the display of a high-quality image will always be obtained without introducing unnecessary mechanical complications to the apparatus and without the need to expose the patient to harmful radiation for a period exceeding that strictly necessary.

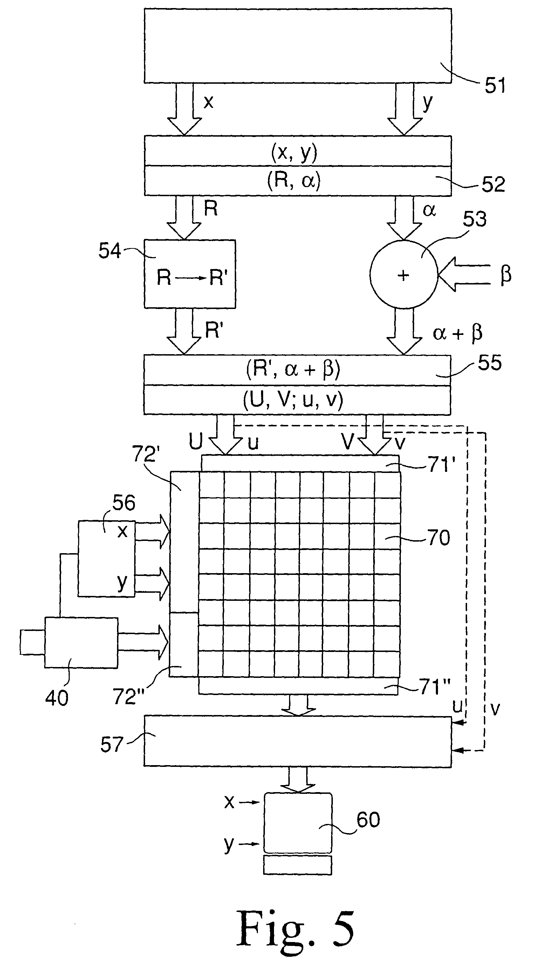

The device 50 shown in Figure 1 thus includes second digital processing means for performing the correction and possible rotation of the images. A block diagram of the second digital processing means is shown in Figure 5.

The digital values representing the pixels of the image IF(x,y) are stored in a working memory 70. The memory 70 is of the dual port type and includes a first port composed of a section 71' for address selection and a section 71" for reading the data from the memory 70, as well as a second port composed of a section 72' for address selection and a section 72" for writing data to the memory 70.

Assuming the use of a CCD sensor with a resolution of 1024x1024 pixels, the memory matrix must have a capacity of at least 2 megapixels, each byte also having a number of bits equal to or exceeding the pixel depth set for the CCD sensor, 12 bits for example.

The selection of the addresses in which the digital values representing each pixel must be stored is determined by a circuit 56 based on the Cartesian coordinates X and Y of each pixel in the detection matrix of the CCD sensor of the camera 40. Within the context of the present invention, the term "circuit" can indicate a circuit section with discrete elements connected together, or an integrated circuit designed to implement one or more predetermined functions, or a programmable logic device (PLD), or even a microprocessor duly programmed to perform one or more predetermined functions.

A circuit 51 scans all of the memory positions along the X and Y axes. For example, considering an image originally acquired by a CCD matrix with a resolution of 1024x1024 pixels, the circuit 51 must provide at least two 10-bit counters in order to scan all of the positions corresponding to the pixels of the CCD matrix.

A circuit 52 receives in input from circuit 51 the position of each pixel defined by the values of the X and Y Cartesian coordinates and determines the position of the same pixel expressed in polar coordinates. In practice, the circuit 52 provides a value R in output that represents the radial polar coordinate, henceforth indicated as the "vector", and a value $\alpha$ that represents the angular polar coordinate, henceforth indicated as the "phase".

The circuit 52 can consist of a microprocessor, such as that known by the code L2330 and supplied by the company LOGIC, namely a device destined to this particular type of application.

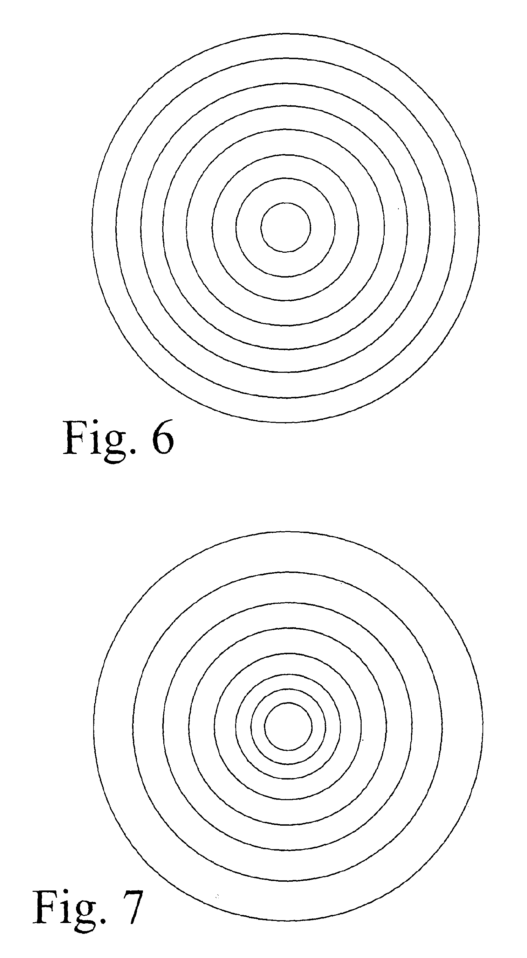

The value R in output from circuit 52 is passed in input to a circuit 54, which has the function of correcting the geometrical distortion induced by the brilliance intensifier 30. For example, if a sample image consisting of a series of concentric circles with constant variations in radius, such as that shown in Figure 6, is taken, the "cushion effect" distortion induced by the brilliance intensifier 30 will result in a deformed image being produced such as that shown in Figure 7, in which the concentric circles exhibit increasing variations in radius when moving away from the centre of the image.

To correct a similar geometrical distortion, circuit 54 transforms the vector value R into a new value R' able to correct this distortion. The transformation can be carried out in a very simple and rapid manner by circuit 54, based on the reference table that is addressed according to the values of R and which contains the corresponding pre-calculated values for R'. These values are calculated according to the geometry and the dimensions of the brilliance intensifier.

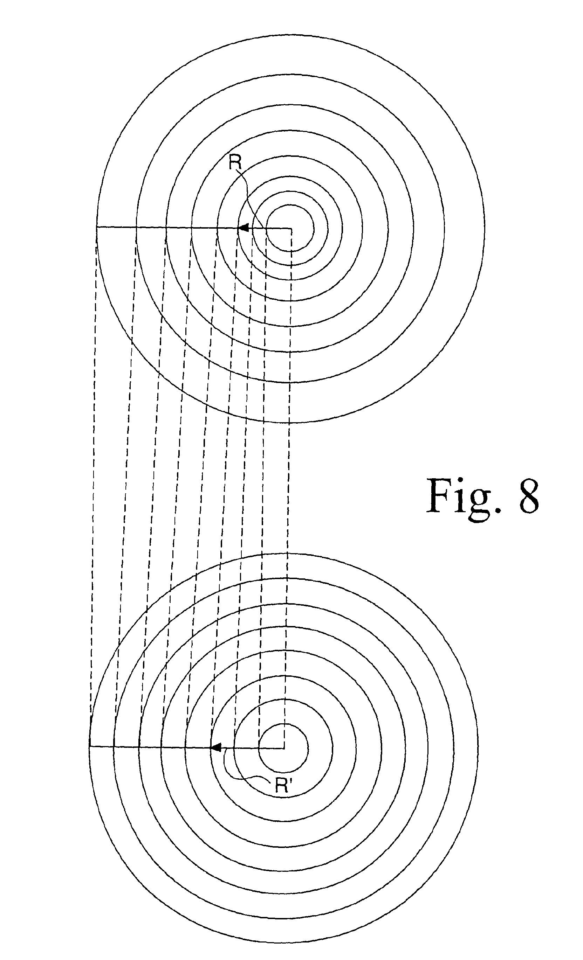

The principle on which the calculation of the predetermined values of the reference table is based, and thus the correction of the geometrical distortion carried out by the circuit 54, is schematically illustrated in Figure 8, in which the images already illustrated in Figures 6 and 7 are used again. For each vector R that identifies the position of a pixel in the distorted image, circuit 54 extrapolates a value R' from the said table corresponding to the length of the vector corresponding to the position of the same pixel in a corrected image substantially coinciding with the real image (Figure 6).

Returning again to the device diagram in Figure 5, in addition to the geometrical correction of distortions, the possibility is also contemplated for rotating the image to be displayed. This is implemented using a circuit 53 including a summing unit that receives in input from circuit 52 the value of the angle $\alpha$ and adds the value $\beta$ corresponding to the angle set by the user according to his/her individual needs. The setting of angle $\beta$ corresponding to the desired rotation can be carried out with known means of data-entry, for example a numeric keypad, serial pointing devices (e. g. mouse, joystick, etc.), and such like. As operations are in polar coordinates, setting the angle of rotation is particularly simple and rapid, without necessarily having to provide any rotation mechanism for the camera 40.

Once the vector and phase values expressing the position of each pixel in the corrected and possibly rotated image have been modified, the respective Cartesian coordinates are calculated for each pixel.

This operation is accomplished by a second microprocessor 55 programmed to calculate the Cartesian coordinates expressed by integer values "U" and "V", and by respective fractional values "u" and "v". The microprocessor 55 can, for example, be the same device already mentioned in the foregoing, namely the L2330 microprocessor from LOGIC. For example, always taking into consideration a memory size for an image with 1024x1024 pixel resolution, the integer values of the new Cartesian coordinates will be expressed by 10 bits, while the fractional values "u" and "v" could be expressed by a number of bits that is sufficient to achieve faithful reproduction. In an experimental prototype that has provided satisfactory results, it has been decided to assign 6 bits to express the fractional values "u" and "v" of the new Cartesian coordinates.

The integer values U and V refer to the position of the values representing each pixel in the memory 70. Nevertheless, the presence of the fractional values "u" and "v" resulting from the conversion of polar coordinates to Cartesian coordinates is indicative of the fact that each pixel of the corrected and rotated image may not have a representative value exactly equal to that identified by the Cartesian coordinates expressed by just the integer values U and V.

The reproduction of the pixels to display on the monitor therefore requires additional processing that is carried out on the representative value of each pixel by a circuit 57. This circuit is implemented by a programmable logic device that receives in input the digital values representing each pixel of the working memory 70, as well as the fractional values "u" and "v" of the new Cartesian coordinates, and calculates the new digital values representing each pixel on the basis of the digital values on one or more adjacent pixels.

The programmable logic device 57 preferable performs a bilinear interpolation operation, which represents a good compromise between speed of execution and result, evaluating the weighted representative values of at least four pixels adjacent to the pixel considered. The weights are calculated instantaneously on the basis of the fractional values "u" and "v".

The values calculated by the programmable logic device 57 for each pixel of the new filtered, corrected and possibly rotated image are thus sent to the display monitor 60, or more correctly, to its associated display memory, together with the original X and Y Cartesian coordinates.

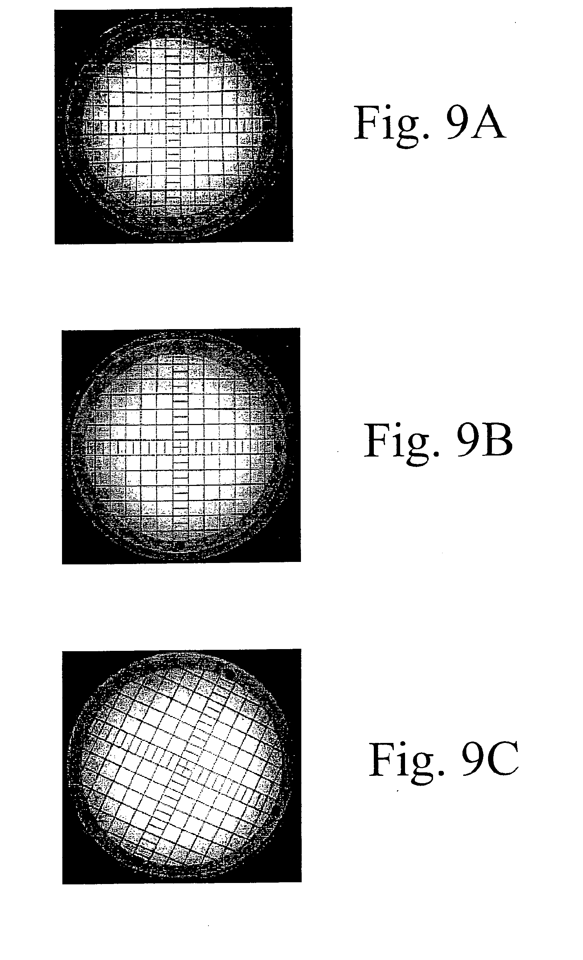

An example of the different representations that can be obtained on a monitor is illustrated in Figures 9A-9C with reference to a sample image composed of a grid. In Figure 9A, the sample image is shown after filtering, but without any correction or rotation, in which it can be noted that the straight lines of the grid are curved. In Figure 9B, the same monitor is shown displaying the sample image filtered and corrected from the geometrical viewpoint, with the lines of the grid straightened with respect to Figure 9A. In Figure 9C, the sample image is shown after filtering, correction and rotation in the clockwise direction with respect to the effective framing.

Various modifications can be made without departing from the scope of the present invention. For example, the embodiment illustrated herein by way of example refers to a monochrome image, hence represented in grey scale, but it is obvious to an expert in the field that a colour image (split into the three fundamental colours RGB, for example) could be filtered, corrected and rotated in the same manner by providing an adequate number of circuits for applying the operations of temporal and spatial filtering, as well as circuits and memories of adequate number and dimensions for the purpose.

**Claims**

1. A process for performing digital X-ray fluoroscopy on the body of a patient, **characterized by** including the steps of:

   a) subjecting the site of interest in the patient's body to irradiation with X-rays in order to acquire a sequence of images of the site of interest by means of a digital image acquisition system,
   b) storing the images of said sequence,
   c) performing at least one noise reduction operation to achieve at least one clear image of the site of interest,
   d) performing at least one geometrical correction operation on the clear image of the site of interest, and
   e) displaying at least one clear and geometrically correct image on a display monitor.

2. The process according to claim 1, wherein the noise reduction in said step c) is effected by applying at least two different filtering algorithms to the value of each pixel.

3. The process according to claim 2, wherein each of said filtering algorithms is applied to the value of each pixel with a variable coefficient between 0 and 1.

4. The process according to claim 1, furthermore including the digital rotation of the image to be displayed before said step e).

5. The process according to any of the previous claims, wherein the geometrical correction and the possible rotation of the image to be displayed are effected by operating on the position of each pixel expressed in polar coordinates, said pixels belonging to an image that is obtained from the previous processing for noise reduction.

6. The process according to claim 5, wherein the values expressing the radial polar coordinate, or vector, and the angular polar coordinate, or phase, relative to the position of each pixel are calculated starting from values expressing the position of said pixel in a system of Cartesian coordinates.

7. The process according to claim 5, wherein the geometrical correction of said image includes changing the length of the vector of one or more pixels.

8. The process according to claim 5, wherein the rotation of said image includes changing the phase of the pixels.

9. The process according to any of the preceding claims, wherein the calculation is provided of new Cartesian coordinates relative to the new position that each pixel of the image to be displayed in step e) must assume.

10. The process according to claim 9, wherein said new Cartesian coordinates are calculated on the basis of the new polar coordinates modified with regards to the vector value and/or phase value.

11. An apparatus for performing digital X-ray fluoroscopy on the body of a patient, including at least one source of X-rays for irradiating a site of interest in the patient's body, at least one system for acquiring a sequence of digital images of the site of interest, means for storing said acquired images and a display monitor for displaying at least one processed image, **characterized by** including a first means for digitally processing the images to perform at least the noise reduction and second digital processing means to perform at least the geometrical correction in order to obtain at least one clear and geometrically correct image of the site of interest on said monitor.

12. The apparatus according to claim 11, wherein said first digital processing means are programmed to apply at least two different filtering algorithms to the value of each pixel.

13. The apparatus according to claim 11, wherein said second digital processing means are programmed to furthermore perform a digital rotation of the image to be displayed.

14. The apparatus according to any of claims 11 to 13, wherein said second digital processing means are programmed for performing the geometrical correction and the possible rotation of the image to be displayed by operating on the position of each pixel expressed in polar coordinates, said pixels belonging to an output image from said first digital processing means.

15. The apparatus according to claim 11, wherein said second digital processing means include counters that scan the Cartesian coordinates relative to the position of each pixel in an image.

16. The apparatus according to claim 11, wherein said second digital processing means include at least one first microprocessor that calculates the value of the vector length and the value of the phase angle of the polar coordinates relative to the position of each pixel starting from the values expressing the position of said pixel in a system of Cartesian coordinates.

17. The apparatus according to claim 11, wherein said second digital processing means include at least one table of predetermined values for modifying the length value of the vector of the polar coordinates of one or more pixels in order to correct distortions introduced by said digital image acquisition system.

18. The apparatus according to claim 11, wherein said second digital processing means include at least one summing unit to add a predetermined angle value to the angle value expressing the phase of the polar coordinates of the pixels in order to obtain an image that is rotated with respect to an acquired image.

19. The apparatus according to claim 11, wherein said second digital processing means include at least one second microprocessor that calculates the new Cartesian coordinates relative to the new position that each pixel must assume in the processed image, said calculation being effected on the basis of the new polar coordinates, with a modified vector value and/or phase value.

20. The apparatus according to claim 11, wherein said second digital processing means include at least one third microprocessor for calculating the digital values representative of each pixel in the processed image on the basis of the digital values representative of one or more adjacent pixels.

Fig. 1

Fig. 2

Input Image

(Col., Row)

3x3 Pixel Neighborhood
$P_5$ is pixel being computed

| $P_1$ | $P_2$ | $P_3$ |
|---|---|---|
| $P_4$ | $P_5$ | $P_6$ |
| $P_7$ | $P_8$ | $P_9$ |

$\times$

| $K_1$ | $K_2$ | $K_3$ |
|---|---|---|
| $K_4$ | $K_5$ | $K_6$ |
| $K_7$ | $K_8$ | $K_9$ |

3x3 Convolution
Kernel

Weighted Sum
Calculation

$(K_1 \cdot P_1) +$
$(K_2 \cdot P_2) +$
$(K_3 \cdot P_3) +$
$(K_4 \cdot P_4) +$
$(K_5 \cdot P_5) +$
$(K_6 \cdot P_6) +$
$(K_7 \cdot P_7) +$
$(K_8 \cdot P_8) +$
$(K_9 \cdot P_9) +$

New Value
for $P_5$

Output Image

LPF(x, y)

(Col., Row)

New value
for $P_5$ placed
in output image

# Fig. 3

I(x,y)

Temporal Filter  TNR(x,y)

1-k

TNR(x,y)

| ID(x,y) |

NBW

k

Spatial Filter  LPF(x,y)

IF(x,y)

# Fig. 4

Fig. 5

Fig. 6

Fig. 7

Fig. 8

Fig. 9A

Fig. 9B

Fig. 9C